# EUROPÄISCHE PATENTANMELDUNG

(11) **EP 1 867 367 A1**
(43) Veröffentlichungstag der Anmeldung: **19.12.2007**
(21) Anmeldenummer: 06115394.6
(22) Anmeldetag: 13.06.2006
(51) Int. Cl.: A63C 5/06, A63C 5/03, B62B 13/04

(54) **Gleitbrett oder Rollbrett**

(71) Anmelder: Wenger, Rudolf, 3612 Steffisburg (CH)
(72) Erfinder: Wenger, Rudolf, 3612 Steffisburg (CH)
(74) Vertreter: BOVARD AG

(57) **Zusammenfassung**

Ein Gleitbrett oder Rollbrett (1) umfasst einen Körper (2) mit einer Oberseite (5) und einer Unterseite (4), an welcher Oberseite (5) Standflächen angebracht sind und welche Unterseite (4) mit einem Gleitbelag oder Rollen ausgestattet ist. In Fahrtrichtung des Gleitbrettes oder Rollbrettes (1) sind zwei Standflächen (6, 7) hintereinander angeordnet. Vor der einen Standfläche (6) und hinter der anderen Standfläche (7) ist jeweils ein Handgriff (9, 10) lösbar an der Oberseite (5) des Gleitbrettes oder Rollbrettes (1) befestigt, an welchen sich ein Benützer dieses Gleitbrettes oder Rollbrettes (1) festhalten kann. Mit diesem Gleitbrett oder Rollbrett (1) wird ein Sportgerät geschaffen, welches einfach zu fahren ist.

## Beschreibung

Die vorliegende Erfindung bezieht sich auf ein Gleitbrett oder Rollbrett, insbesondere für Schnee, umfassend einen Körper mit einer Oberseite und einer Unterseite, an welcher Oberseite Standflächen angebracht sind und welche Unterseite mit einem Gleitbelag oder Rollen ausgestattet ist.

Gleitbretter, insbesondere für Schnee, sind in vielfacher Weise bekannt. So zeigt beispielsweise die DE-C 10105932 eine Gleitvorrichtung für Schnee oder Eis, bei welcher in Gleitrichtung gesehen im vorderen Bereich ein Griffelement angebracht ist. Durch seitliches Kippen dieses Griffelementes lässt sich die Gleitvorrichtung steuern, wozu entsprechende Vorkehrungen vorgesehen sind. Der Benutzer dieser Gleitvorrichtung steht hierbei mit parallel zur Gleitrichtung ausgerichteten Füssen auf der vorgesehenen Standfläche.

Ferner sind Gleitbretter für Schnee bekannt, die als so genannte "Snowboards" bezeichnet sind. Diese Snowboards weisen Bindungen auf, mittels welchen die Schuhe des Benützers mit dem Snowboard verbunden sind. Hierbei steht der Benützer im Wesentlichen quer zur Gleitrichtung auf dem Snowboard, die Steuerung des Snowboards erfolgt durch Gewichtsverlagerung des Benützers, wobei hierzu das Snowboard eine taillierte Form aufweist.

Da beide Füsse eines Benützers eines Snowboards fest mit diesem verbunden sind, ist insbesondere das Erlernen des Snowboardfahrens mit gewissen Problemen verbunden. Beim Verlieren des Gleichgewichts fällt der jeweilige Benützer unweigerlich nach vorne oder nach hinten, wobei er meistens versucht, den Sturz mit den Händen aufzufangen, was zu Verletzungen führen kann.

In vielfältiger Weise sind auch Rollbretter bekannt, die als so genannte "Skateboards" bezeichnet werden, an deren Unterseite ein vorderes und ein hinteres Rollenpaar angeordnet sind, welche beiden Rollenpaare bei seitlicher Neigung des Rollbretts auslenken, so dass auf diese Weise Kurven gefahren werden können. Auch hier ist das Erlernen des Skateboardfahrens mit gewissen Problemen verbunden, auch hier ist die Sturz- und Verletzungsgefahr vorhanden.

Die Aufgabe der vorliegenden Erfindung besteht nun darin, ein Gleitbrett oder Rollbrett so auszugestalten, dass das Fahren des Gleitbretts und Rollbretts und insbesondere das Erlernen des Gleitbrettfahrens oder Rollbrettfahrens in einfacherer Weise erfolgen kann, als mit dem oben erwähnten, üblichen Snowboard bzw. Skateboard.

Erfindungsgemäss erfolgt die Lösung dieser Aufgabe dadurch, dass in Fahrtrichtung des Gleitbrettes oder Rollbrettes zwei Standflächen hintereinander angeordnet sind, und dass vor der einen Standfläche und hinter der anderen Standfläche jeweils ein Handgriff lösbar an der Oberseite des Gleitbrettes oder Rollbrettes befestigt ist.

Da die Füsse des Benützers nicht fest über Bindungen mit dem Brett verbunden sind, wie dies insbesondere beim Snowboard der Fall ist, und da sich der Benützer links und rechts mit beiden Händen an den jeweiligen Handgriffen festhalten kann, ist insbesondere beim Lernen das Risiko des Verlierens des Gleichgewichts erheblich vermindert. Zudem hat der Benützer die Möglichkeit, bei Verlust des Gleichgewichts dies mit dem einen oder anderen Fuss auszugleichen. Insbesondere dürfte mit dem so ausgestatteten Gleitbrett oder Rollbrett das Gleiten über den Schnee bzw. das Fahren auf einer harten Oberfläche für den entsprechenden Benützer einfacher ausfallen, das heisst, das Sturzrisiko wird vermindert.

In vorteilhafter Weise besteht der jeweilige Handgriff aus einem Bügel, der am einen Ende einer Stange befestigt ist, deren anderes Ende in eine Halteeinrichtung einsetzbar und fixierbar ist, welche mit dem Gleitbrett oder Rollbrett lösbar verbunden ist. Durch die Bügelform des Handgriffs wird eine optimales Festhalten des Benützers erreicht, das Befestigen der Stange am Gleitbrett oder Rollbrett wird durch die Halteeinrichtung, die mit dem Gleitbrett oder Rollbrett lösbar verbunden ist, in einfacher Weise ermöglicht.

Eine weitere vorteilhafte Ausgestaltung der Erfindung besteht darin, dass an der Halteeinrichtung ein Gelenk angebracht ist, in welches das andere Ende der Stange des Handgriffs einsetzbar ist, durch welches der Handgriff von einer im Wesentlichen senkrecht zur Oberseite des Gleitbretts oder Rollbretts stehenden Position in eine umgeschwenkte, im Wesentlichen parallel zur Oberseite des Gleitbretts oder Rollbretts liegenden Position bringbar ist. Dadurch besteht die Möglichkeit, beispielsweise zum Transportieren des Gleitbretts oder Rollbretts die Handgriffe umzuschwenken und in eine parallel zur Oberseite des Gleitbretts oder Rollbretts liegende Position zu bringen, das Gleitbrett oder Rollbrett wird somit handlicher.

In vorteilhafter Weise ist in der Stange des Handgriffs eine Einrichtung zur Verstellung der Höhe angeordnet, mit welcher die Höhe des Bügels bezüglich des Gleitbrettes oder Rollbrettes einstellbar ist. Dadurch lässt sich der Bügel für Personen unterschiedlicher Körpergrösse in die optimale Position bringen.

Eine weitere vorteilhafte Ausgestaltung der Erfindung besteht darin, dass zwischen den beiden Standflächen eine weitere Halteeinrichtung mit dem Gleitbrett oder Rollbrett lösbar verbindbar ist, in welche weitere Halteeinrichtung ein Sitzelement einsetzbar ist. Dadurch erhält der Benützer die Möglichkeit, sich in Pausen in bequemer Weise auf das Sitzelement zu setzen.

In vorteilhafter Weise besteht das Sitzelement aus einer Sitzfläche, welche am einen Ende einer weiteren Stange angebracht ist, während das andere Ende der weiteren Stange in die weitere Halteeinrichtung einsetzbar und fixierbar ist, wodurch ein einfacher Aufbau erhalten wird.

In vorteilhafter Weise ist in die weitere Stange eine Vorrichtung zur Verstellbarkeit der Höhe des Sitzelementes bezüglich des Gleitbrettes oder Rollbrettes integriert. Dadurch lässt sich die Höhe des Sitzelementes an die Körpergrösse eines Benützers in optimaler Weise anpassen.

Eine weitere vorteilhafte Ausgestaltung der Erfindung besteht darin, dass die beiden Standflächen aus rutschfesten Belägen gebildet sind, die mit der Oberseite des Gleitbrettes oder Rollbrettes fest verbunden sind. Damit wird der erforderliche Halt zwischen den Schuhen des Benützers und dem Gleitbrett oder Rollbrett in einfacher Weise erhalten.

Eine weitere vorteilhafte Ausgestaltung der Erfindung besteht darin, dass zur Befestigung der Halteinrichtungen und der weiteren Halteeinrichtung auf dem Gleitbrett oder Rollbrett in diesem Verankerungselemente vorgesehen sind, wodurch eine optimale Verbindung erreichbar ist.

Ein Ausführungsbeispiel der vorliegenden Erfindung in Form eines Gleitbrettes wird nachfolgend anhand der beiliegenden Zeichnung beispielhaft näher erläutert.

Es zeigt:
Fig. 1 in räumlicher Darstellung: das erfindungsgemässe Gleitbrett mit den beiden Handgriffen in der stehenden Position und dem ausgefahrenen Sitzelement;
Fig. 2: eine Seitenansicht auf das erfindungsgemässe Gleitbrett gemäss Fig. 1;
Fig. 3 in räumlicher Darstellung: das erfindungsgemässe Gleitbrett mit den beiden Handgriffen in der liegenden Position und dem eingefahrenen Sitzelement;
Fig. 4: eine Seitenansicht auf das erfindungsgemässe Gleitbrett gemäss Fig. 3;
Fig. 5: eine räumliche Darstellung der Halteinrichtung mit dem Gelenk und der schwenkbar daran angeordneten Stange des Handgriffs;
und Fig. 6: eine weitere räumliche Darstellung der Halteeinrichtung mit dem Gelenk und der daran angebrachten Stange des Handgriffs.

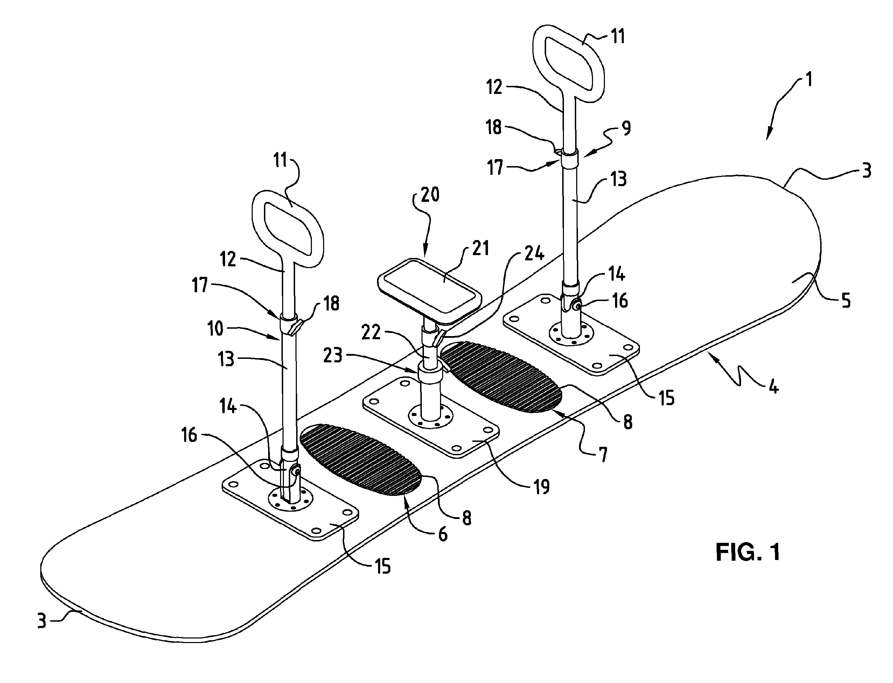

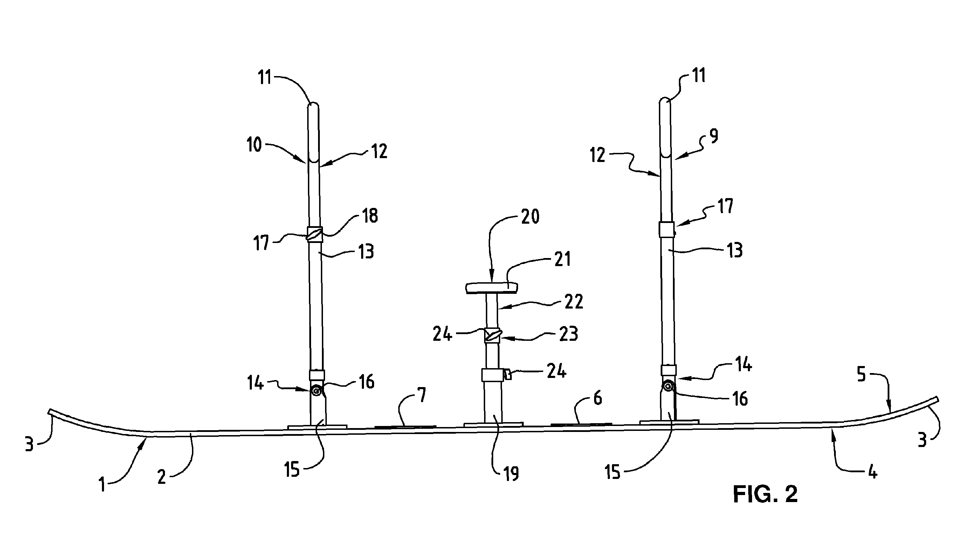

Wie aus den Fig. 1 und 2 ersichtlich ist, umfasst das erfindungsgemässe Gleitbrett 1 einen Körper 2, der im Wesentlichen einem Gleitkörper eines handelsüblichen Snowboards entspricht. Der Gleitkörper 2 weist an beiden Enden eine leicht hochgezogene Schaufel 3 auf, wodurch mit diesem Gleitbrett 1 in beide Richtungen der Längsachse insbesondere über Schnee gegleitet bzw. gefahren werden kann. Der Gleitkörper 2 ist in bekannter Weise elastisch und tailliert, so dass in bekannter Weise ein Kurvenfahren möglich ist.

Der Gleitkörper 2 ist an seiner Unterseite 4 in bekannter Weise mit einem Gleitbelag ausgestattet, die Randbereiche des Gleitkörpers sind unterseitig ebenfalls in bekannter Weise mit eingesetzten Stahlkanten verstärkt.

Auf der Oberseite 5 des Gleitkörpers 2 sind in Gleitrichtung des Gleitbrettes 1 zwei Standflächen 6 und 7 hintereinander angeordnet. Diese beiden Standflächen 6 und 7 sind aus einem rutschfesten Belag 8 gebildet, welcher mit der Oberseite 5 des Gleitkörpers 2 des Gleitbrettes 1 fest verbunden ist, beispielsweise durch aufkleben. Dieser rutschfeste Belag 8 dient dazu, dass der Benützer dieses Gleitbrettes genügend Halt findet, wenn er sich auf das Gleitbrett stellt. Selbstverständlich könnten anstelle dieser rutschfesten Beläge 8 auch andere Hilfsmittel verwendet werden, beispielsweise Schlaufen, wie sie bei Surfbrettern verwendet werden.

Vor der einen Standfläche 6 und hinter der anderen Standfläche 7 ist jeweils ein Handgriff 9, 10 lösbar an der Oberseite 5 des Gleitbrettes 1 befestigt. Jeder Handgriff 9 und 10 umfasst einen Bügel 11, der an einem Ende 12 einer Stange 13 befestigt ist, während das andere Ende 14 der Stange 13 in eine Halteeinrichtung 15 eingesetzt ist, welche mit dem Gleitbrett 1 lösbar verbunden ist.

An jeder Halteeinrichtung 15 ist ein Gelenk 16 angebracht, um welches jeweils die Stange 13 des Handgriffs 10 von der stehenden Position, wie sie in den Figuren 1 und 2 dargestellt ist, in eine liegende Position gebracht werden kann, wie später noch beschrieben wird.

Die Handgriffe 9 und 10 sind ferner mit einer Einrichtung 17 zur Verstellung der Höhe ausgestattet, mit welcher jeweils die Höhe des Bügels 11 bezüglich des Gleitbrettes 1 eingestellt werden kann. Hierbei ist das eine Ende 12 der Stange 13 in das andere Ende 14 einschiebbar, zur Fixierung der Höhenlage sind in bekannter Weise Klemmschrauben 18 vorgesehen.

Zwischen den beiden Standflächen 6 und 7 ist eine weitere Halteeinrichtung 19 am Gleitbrett 1 lösbar befestigt. In diese weitere Halteeinrichtung 19 lässt sich ein Sitzelement 20 einsetzen. Dieses Sitzelement 20 besteht aus einer Sitzfläche, welche am einen Ende einer weiteren Stange 22 angebracht ist, während das andere Ende der weiteren Stange 22 in die weitere Halteeinrichtung 19 einsetzbar und fixierbar ist. Hierbei kann die Sitzfläche 21 noch mit einer Polsterung versehen sein.

In die weitere Stange 22 des Sitzelementes 20 ist eine Vorrichtung 23 zur Verstellbarkeit der Höhe des Sitzelementes 20 bezüglich des Gleitbrettes 1 integriert. Diese Vorrichtung 23 ist so ausgestaltet, dass die weitere Stange 22 aus mehreren Stangenstücken gebildet ist, die ineinander verschiebbar sind, und dass die jeweilige Position der einzelnen Stangenstücke zueinander ebenfalls über Klemmschrauben 24 fixiert werden können.

Zur Benützung dieses Gleitbrettes stellt sich ein Benützer mit seinen Füssen auf die Standflächen 6 und 7 und hält sich an den Handgriffen 9 und 10 fest. So kann er nun über den Schnee gleiten, das Einleiten des Kurvenfahrens kann durch entsprechendes Verkippen des Brettes mit Hilfe der Handgriffe 9 und 10 erfolgen. Bei Stopps oder Pausen kann sich der Benützer auf das Sitzelement 20 setzen.

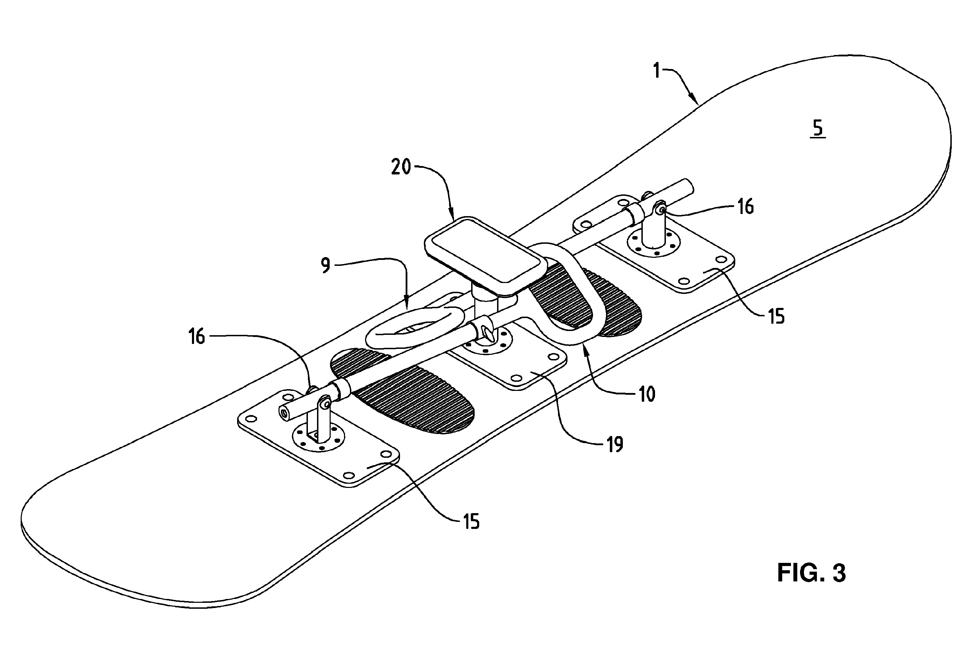

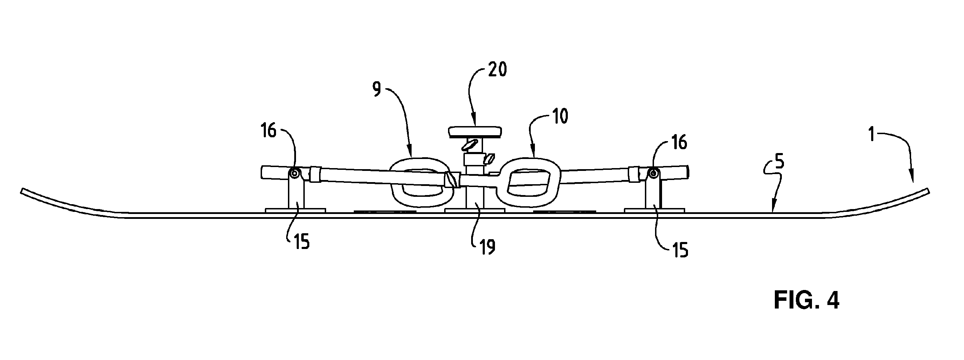

Wie aus den Figuren 3 und 4 ersichtlich ist, kann beispielsweise zum Transport des Gleitbrettes 1 der Handgriff 9 und der Handgriff 10 um das jeweilige Gelenk 16, das an der jeweiligen Halteeinrichtung 15 befestigt ist, umklappen, die Handgriffe 9 und 10 gelangen dann von der stehenden Position, wie sie in den Figuren 1 und 2 dargestellt ist, in eine liegende Position, die beiden Handgriffe 9 und 10 sind dann im Wesentlichen parallel zur Oberseite 5 des Gleitbrettes 1 ausgerichtet. Gleichzeitig kann auch das Sitzelement 20 in seine unterste Position gebracht werden, das Gleitbrett 1 weist dann eine relativ geringe Höhe auf und kann so gut transportiert werden, beispielsweise auf einem Dachträger eines Autos. In dieser liegenden Position der Handgriffe 9 und 10 ist das Gleitbrett 1 sehr kompakt und kann auch gut aufbewahrt werden.

Es kann vorgesehen sein, dass im Gleitbrett 1 zur optimalen Befestigung der Halteeinrichtungen 15 und der weiteren Halteeinrichtung 19 Schraubenlöcher vorgesehen sind, so dass die Halteeinrichtungen 15 und die weitere Halteeinrichtung 19 in einfacher Weise mit dem Gleitbrett 1 verschraubt werden können.

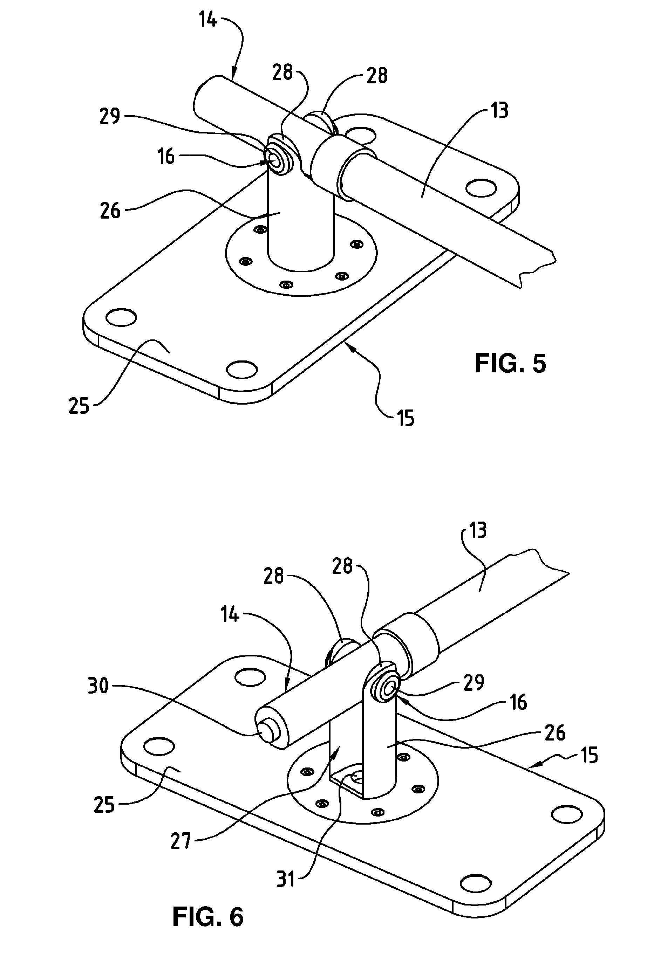

In den Figuren 5 und 6 ist eine der Halteeinrichtungen 15 dargestellt. Diese Halteeinrichtung 15 umfasst eine Halteplatte 25, die auf das Gleitbrett aufgeschraubt werden kann. Im Zentrum dieser Halteplatte 25 ist ein Rohrstück 26 gehalten. Dieses Rohrstück 26 weist eine schlitzförmige Ausnehmung 27 auf. Am oberen Bereich des Rohrstückes 26 sind zwei gegenüberliegende Laschen 28 angeordnet. Diese Laschen 28 dienen der Lagerung eines Achsstückes 29. Dieses Achsstück 29 durchdringt das andere Ende 14 der Stange 13, welche um dieses Achsstück 29 schwenkbar ist. In den Figuren 5 und 6 befindet sich die Stange 13 in der liegenden Position, wie dies in den Figuren 3 und 4 ersichtlich ist. Die Stange 13 lässt sich durch Verschwenken um das Achsstück 29, welche das Gelenk 16 bildet, in die stehende Position bringen, diese stehende Position kann beispielsweise durch einen Bolzen 30, der an der Unterseite der Stange 13 längsverschiebbar angebracht ist, fixiert werden, indem dieser Bolzen 30 in eine entsprechende Ausnehmung 31, die im Grunde des Rohrstückes 26 angebracht ist, einrastet. Das Einrasten und Ausklinken dieses Bolzen 30 in der Ausnehmung 31 kann in bekannter, nicht dargestellter Weise über einen in der Stange angeordneten Schwenkhebel erfolgen, der mit dem Bolzen 30 verbunden ist.

In identischer Weise können die vorgängig beschriebenen Bestandteile, die auf einem Gleitbrett befestigt wurden, auch an der Oberseite eines Rollbrettes angebracht werden.

Mit diesem erfindungsgemässen Gleitbrett oder Rollbrett wird ein Sportgerät geschaffen, das in einfacher Weise zu benützen ist und insbesondere für Anfänger keine unüberwindbaren Hindernisse darstellt.

## Patentansprüche

1. Gleitbrett oder Rollbrett, umfassend einen Körper (2) mit einer Oberseite (5) und einer Unterseite (4), an welcher Oberseite (5) Standflächen (6, 7) angebracht sind und welche Unterseite (4) mit einem Gleitbelag oder Rollen ausgestattet ist, **dadurch gekennzeichnet, dass** in Fahrtrichtung des Gleitbrettes oder Rollbrettes (1) zwei Standflächen (6, 7) hintereinander angeordnet sind, und dass vor der einen Standfläche (6) und hinter der anderen Standfläche (7) jeweils ein Handgriff (9, 10) lösbar an der Oberseite (5) des Gleitbrettes oder Rollbrettes (1) befestigt ist.

2. Gleitbrett oder Rollbrett nach Anspruch 1, **dadurch gekennzeichnet, dass** der jeweilige Handgriff (9, 10) aus einem Bügel (11) besteht, der am einen Ende (12) einer Stange (13) befestigt ist, deren anderes Ende (14) in eine Halteeinrichtung (15) einsetzbar und fixierbar ist, welche mit dem Gleitbrett oder Rollbrett (1) lösbar verbunden ist.

3. Gleitbrett oder Rollbrett nach Anspruch 2, **dadurch gekennzeichnet, dass** an jeder Halteeinrichtung (15) ein Gelenk (16) angebracht ist, in welches das andere Ende (14) der Stange (13) des Handgriffs (9, 10) einsetzbar ist, durch welches der Handgriff (9, 10) von einer im wesentlichen senkrecht zur Oberseite (5) des Gleitbretts oder Rollbretts (1) stehenden Position in eine umgeschwenkte, im wesentlichen parallel zur Oberseite (5) des Gleitbretts oder Rollbretts (1) liegenden Position bringbar ist.

4. Gleitbrett oder Rollbrett nach Anspruch 2 oder 3, **dadurch gekennzeichnet, dass** in der Stange (13) jedes Handgriffs (9, 10) eine Einrichtung (17) zur Verstellung der Höhe angeordnet ist, mit welcher die Höhe des Bügels (11) bezüglich des Gleitbretts oder Rollbretts (1) einstellbar ist.

5. Gleitbrett oder Rollbrett nach einem der Ansprüche 1 bis 4, **dadurch gekennzeichnet, dass** zwischen den beiden Standflächen (6, 7) eine weitere Halteeinrichtung (19) mit dem Gleitbrett oder Rollbrett (1) lösbar verbindbar ist, in welche weitere Halteeinrichtung (19) ein Sitzelement (20) einsetzbar ist.

6. Gleitbrett oder Rollbrett nach Anspruch 5, **dadurch gekennzeichnet, dass** das Sitzelement (20) aus einer Sitzfläche (21) besteht, welche am einen Ende einer weiteren Stange (22) angebracht ist, während das andere Ende der weiteren Stange (22) in die weitere Halteeinrichtung (19) einsetzbar und fixierbar ist.

7. Gleitbrett oder Rollbrett nach Anspruch 5 oder 6, **dadurch gekennzeichnet, dass** in die weitere Stange (22) eine Vorrichtung (23) zur Verstellbarkeit der Höhe des Sitzelementes (20) bezüglich des Gleitbrettes oder Rollbrettes (1) integriert ist.

8. Gleitbrett oder Rollbrett nach einem der Ansprüche 1 bis 7, **dadurch gekennzeichnet, dass** die beiden Standflächen (6, 7) aus rutschfesten Belägen (8) gebildet sind, die mit der Oberseite (5) des Gleitbrettes oder Rollbrettes (1) fest verbunden sind.

9. Gleitbrett oder Rollbrett nach einem der Ansprüche 1 bis 8, **dadurch gekennzeichnet**, zur Befestigung der Halteeinrichtungen (15) und der weiteren Halteeinrichtung (19) auf dem Gleitbrett oder Rollbrett (1) in diesem Verankerungselemente vorgesehen sind.
